Europäisches Patentamt

European Patent Office

Office européen des brevets

(19)

(11) Veröffentlichungsnummer: **0 291 976 B1**

(12) **EUROPÄISCHE PATENTSCHRIFT**

(45) Veröffentlichungstag der Patentschrift:
10.07.91 Patentblatt 91/28

(51) Int. Cl.⁵: **C01B 23/00, B01D 53/04**

(21) Anmeldenummer: 88108031.1

(22) Anmeldetag: 19.05.88

(54) **Verfahren zur Heliumgewinnung.**

Verbunden mit 88904521.7/0358700
(europäische
Anmeldenummer/Veröffentlichungsnummer)
durch Entscheidung vom 03.09.90.

(30) Priorität: 20.05.87 DE 3716899

(43) Veröffentlichungstag der Anmeldung:
23.11.88 Patentblatt 88/47

(45) Bekanntmachung des Hinweises auf die
Patenterteilung:
10.07.91 Patentblatt 91/28

(84) Benannte Vertragsstaaten:
BE DE ES FR GB IT NL

(56) Entgegenhaltungen:
EP-A- 0 071 553
EP-A- 0 092 695
EP-A- 0 112 640
DE-A- 3 132 758
US-A- 3 636 679
US-A- 4 477 265

(56) Entgegenhaltungen:
CHEMICAL ABSTRACTS, Band 92, Nr. 14, April
1980, Seite 127, Zusammenfassung Nr.
113079a, Columbus, Ohio, US; & JP-A-79 110
193 (TOKYO SHIBAURA ELECTRIC CO., LTD)
29-08-1979

(73) Patentinhaber: Bergwerksverband GmbH
Franz-Fischer-Weg 61
W-4300 Essen 13 (DE)

(72) Erfinder: Knoblauch, Karl, Dr.-Ing.
Semperstrasse 55
W-4300 Essen (DE)
Erfinder: Pilarczyk, Erwin, Dr.-Ing.
Birkenstrasse 63
W-4250 Bottrop (DE)
Erfinder: Giessler, Klaus
Schultestrasse 41
W-4650 Gelsenkirchen (DE)
Erfinder: Bukowski, Hans
Humboldtstrasse 43
W-4300 Essen (DE)
Erfinder: D'Amico, Joseph
6422 Oak Park Ct.
Baltimore, MD 21090 (US)
Erfinder: Reinhold, Herbert
1100 Crestview Drive
Annapolis, MD 21041 (US)

## Beschreibung

Die Erfindung betrifft ein Verfahren zur Heliumgewinnung nach einem Druck-Wechsel-Adsorptions-Prozeß aus Gasgemischen, die Helium, Stickstoff, Methan sowie gegebenenfalls weitere Gase enthalten und durch Kohlenstoffmolekularsiebe mit einem mittleren Adsortionsdurchmesser zwischen 0,1 und 0,4 nm, vorzugsweise zwischen 0,3 und 0,4 nm, geleitet werden, die Stickstoff, Methan sowie gegebenenfalls die weiteren Gase adsorbieren, wobei das Gasgemisch zyklisch vier parallel geschalteten Adsorbern (E, F, G, H) aufgegeben wird, die jeweils nacheinander eine Druckaufbauphase, eine Adsorptionsphase und eine Druckentlastungsphase zur Regeneration durchlaufen, wobei der Druckaufbau zunächst durch Druckausgleich mit einem zu regenerierenden Adsorber und dann mit Produktgas erfolgt, während die Regeneration mit Druckausgleich beginnt, woran sich die Entspannung und Spülung mit Produktgas anschließt.

Aus der EP-A-00 92 695 ist ein solches Druckwechsel-Adsorptionsverfahren zur Reinigung von Helium bekannt, bei dem aus einem Ausgangsgasgemisch mit Helium und im wesentlichen Stickstoff, Argon und Sauerstoff sowie geringeren Anteilen an Kohlendioxid und Methan unter Verwendung von Kohlenstoff-Molekularsieben Helium mit einer Reinheit von über 99,9 Vol.-% gewonnen werden kann. Das Ausgangsgasgemisch bei diesem einstufigen Verfahren enthält jedoch bereits 50-95 Vol.-% Helium. Dieses Verfahren eignet sich nicht zur Heliumgewinnung aus Gasgemischen mit bis zu 10% Helium.

Es ist weiterhin aus EP-A-0 112 640 an sich bekannt, daß sich bessere Argonreinheiten aus niedrigen Ausgangswerten in einem Gasgemisch erzeugen lassen, wenn das in einer ersten Adsorptionsstufe angereicherte Gas in einer nachgeschalteten Adsorptionsstufe weiter aufgetrennt wird. Gemäß diesem Dokument arbeiten die Adsorber auch nach dem bekannten Druck-Wechsel-Adsorptions-Prozeß, zum Beispiel mit vier Adsorbern pro Stufe und mit Kohlenstoff-Molekularsieben mit einem mittleren Adsorptionsporendurchmesser von 0,3 nm. Das Abgas einer Stufe kann in das Einsatzgas einer vorhergehenden Stufe zurückgeführt werden.

Schließlich ist aus DE-A-3 132 758 und EP-A-0 071 553 die Verwendung von mit Aktivkohle gefüllten Adsorbern als Vorfilterstufe an sich bekannt, um höhere Kohlenwasserstoffe sowie gegebenenfalls weitere Verunreinigungen aus einem haliumhaltigen Gasgemisch zu entfernen.

Helium in hoher Reinheit wird zunehmend für verschiedene Anwendungszwecke benötigt, z.B. in Kälteanlagen zur Kälteerzeugung, als Schutzgas beim Schweißen und in der chemischen Industrie, in der Luftraumtechnik als Inertgas, bei Taucharbeiten in Form von Tauchatmungsgas, in der Chromatographie als Trägergas, bei der Lecksuche, als Ballongas und für andere Zwecke.

Für diese Anwendungszwecke wird Helium benötigt, das eine hohe Reinheit aufweist. Um diese hohen Reinheiten zu erzielen, sind bei Gasgemischen, die nur niedrige Heliumgehalte aufweisen, mehrere Verfahrensstufen erforderlich, um das Gasgemisch zunächst an Helium anzureichern und dann aus dem an Helium angereicherten Gasgemisch schließlich Helium mit hoher Reinheit zu gewinnen.

Helium wird nach dem Stand der Technik, wie aus "Bureau of Mines, Preprint from Bulletin 675 – Helium–, 1985 Edition, United States of Interior", S. 3 und 4, bekannt ist, in mehrstufigen Verfahren mit einer Reinheit von über 99,9 Vol.-% aus heliumhaltigen Erdgasen gewonnen. Heliumhaltige Erdgase enthalten als Hauptbestandteile Stickstoff und Methan sowie bis zu 10 Vol.-% Helium neben geringeren Anteilen an verschiedenen höheren Kohlenwasserstoffen und Kohlendioxid.

Dabei wird das Erdgas zunächst in einer Kälteanlage auf ca. –150°C abgekühlt, wobei hauptsächlich die Kohlenwasserstoffe auskondensiert werden. Das so erzeugte Gasgemisch enthält bis auf geringe Anteile an anderen Gasen über 50 Vol.-% Helium sowie Stickstoff. Dieses Rohhelium wird in einer Druckwechsel-Adsorptionsanlage weiter aufgetrennt, wobei Helium mit einer Reinheit von über 99,9 Vol.-% gewonnen wird. Die Helium-Ausbeute der Druckwechselanlage liegt bei ca. 60%, das restliche Helium ist hoch verunreinigt im Desorptionsgas enthalten. Das Desorptionsgas wird weiter aufgearbeitet. In einer zweiten Kälteanlage wird das zuvor komprimierte Desorptionsgas auf ca. –185°C abgekühlt und dabei Verunreinigungen auskondensiert. Das verbleibende Helium/Stickstoff-Gemisch wird zur Druckwechselanlage zurückgeführt und mit dem Rohhelium aus der ersten Kälteanlage vermischt. Durch die Rückführung ist es möglich, einen hohen Heliumanteil zurückzugewinnen. Nachteilig ist, daß dieses Verfahren zwei Kälteanlagen und zusätzlich eine Druckwechselanlage benötigt. Außerdem ist es sehr energieaufwendig.

Der Erfindung liegt die Aufgabe zugrunde, die Nachteile der bekannten Verfahren zu vermeiden und die Gewinnung von Helium aus Erdgasen mit geringen Heliumgehalten allein durch Druckwechseladsorption ohne eine Zwischenanreicherung in Kälteanlagen mit einer hohen Reinheit und zugleich mit einer hohen Ausbeute zu erzielen.

Diese Aufgabe wird gemäß Anspruch 1 durch die Kombination von mehreren Adsorptionsverfahrensstufen, zugehörigen Adsorptionsverfahrensschritten und Adsorptionsmitteln gelöst.

Als Adsorptionsmittel werden für das erfindungsgemäße Verfahren spezielle Kohlenstoffmolekularsiebe mit einem mittleren Adsorptionsporendurchmesser zwischen 0,1 und 0,4 nm, vorzugsweise 0,3 und 0,4 nm verwendet, die äußerst wirkungsvoll Stickstoff und Methan von Helium abtrennen, so daß Helium hoher Reinheit gewonnen werden kann, wobei bei Anwendung der vorgeschlagenen Adsorptionsverfahrensstufen und -schritte vor allem eine unerwartet hohe Ausbeute von über 90% Helium erzielt wird. Dies gelingt nach dem vorgeschlagenen Anreicherungsverfahren allein unter Anwendung der Druckwechseltechnik bereits aus Ausgangsgasgemischen mit einem vergleichsweise niedrigen Heliumgehalt von etwa 2-10%, ohne daß zusätzlich eine Kälteanlage benötigt wird. Es wird dadurch mit sehr niedrigem Energieaufwand ein Produktgas erzeugt, das eine Heliumreinheit von 99,9% und höher ausweist.

Zweckmäßig beträgt die höchste Druckstufe ($P_5$) – Adsorptionsdruck – über 1 bar, vorzugsweise 10-30 bar, und der Endvakuumdruck unter 500 mbar, vorzugsweise 50 mbar.

Gemäß einer speziellen Ausführungsform sind den einzelnen Druckstufen folgende Druckwerte zugeordnet :

$P_1 =$ 50 mbar
$P_2 =$ 1 bar
$P_3 =$ 4 bar
$P_4 =$ 11,7 bar
$P_5 =$ 20 bar

Die Gesamtzyklenzeit beträgt zweckmäßig 450 bis 3600 s.

Gemäß einer bevorzugten Ausführungsform wird mit einer Gesamtzyklenzeit von 720 s gearbeitet.

Bei einer Gesamtzyklenzeit von 720 s kann die Druckentlastungsphase vorteilhaft folgende Zeitintervalle umfassen :

```
1. Entlastungsschritt von P5 auf P4        55 s
   Ruhestellung                           115 s
2. Entlastungsschritt von P4 auf P3        10 s
3. Entlastungsschritt von P3 auf P2        55 s
4. Entlastungsschritt von P2 auf P1       115 s
```

Die Druckaufbauphase bei 720 s Gesamtzyklenzeit wird zweckmäßig in folgende Zeitintervalle unterteilt :

```
1. Druckaufbauschritt von P1 auf P3        10 s
2. Druckaufbauschritt von P3 auf P4        55 s
3. Druckaufbauschritt von P4 auf P5       125 s
```

Bei einer Gesamtzyklenzeit von 720 s empfiehlt es sich, als Zeitintervall der Produktgasgewinnung 180 s zu wählen.

Das erfindungsgemäße Verfahren ist besonders für solche Einsatzgase geeignet, deren Heliumanteil bis zu 10 Vol.-%, vorzugsweise 2-8 Vol.-% beträgt. Dabei kann im Heliumanteil im Produktgas der ersten Adsorptionsstufe (I) bis zu 95 Vol.-% erreicht werden. Der Heliumanteil im Endproduktgas der zweiten Adsorptionsstufe (II) kann bei 99,9 Vol.-% und höher liegen.

Das erfindungsgemäße Verfahren eignet sich besonders zur Heliumgewinnung aus Erdgasen, die nach einer vorherigen Abtrennung von höheren Kohlenwasserstoffen und Spurenverunreinigungen, z.B. in an sich bekannten Adsorptionsvorfiltern, folgende Zusammensetzung haben können (Angaben in Vol.-%) :

$N_2$    40-80
He    2-10
$CH_4$    10-40
$CO_2$    < 0,1-10

Weitere Vorteile und Ausgestaltungen des Verfahrens ergeben sich aus der nachfolgenden Beschreibung von Ausführungsbeispielen anhand der beiliegenden Zeichnung. In der Zeichnung zeigen :

| Fig. 1 | eine einstufige Adsorptionsanlage mit vier parallelen Adsorbern zur Anreicherung von Helium auf bis zu 95 Vol.-% ; |
| Fig. 2 | ein Druck-Zeit-Diagramm eines Adsorbers der Anlage gemäß Fig. 1 ; |
| Fig. 3 | ein Druck-Zeit-Diagramm mit zugeordneter Teilschrittfolgetabelle für die vier Adsorber der Anlage gemäß Fig. 1 ; |
| Fig. 4 | einen Ventilschaltplan für die vier Adsorber der Anlage gemäß Fig. 1 ; |
| Fig. 5 | ein Diagramm über die Abhängigkeit der Heliumausbeute von der Heliumreinheit in einer Anlage gemäß Fig. 1 ; |
| Fig. 6 | eine zweistufige Adsorptionsanlage mit vier parallelen Adsorbern je Stufe zur Gewinnung von Helium mit einer Reinheit über 99,9 Vol.-% ; |
| Fig. 7 | ein Druck-Zeit-Diagramm mit zugeordneter Teilschrittfolgetabelle für die vier Adsorber der Stufe II der Anlage gemäß Fig. 6 ; |
| Fig. 8 | einen Ventilschaltplan für die vier Adsorber der Stufe II der Anlage gemäß Fig. 6. |

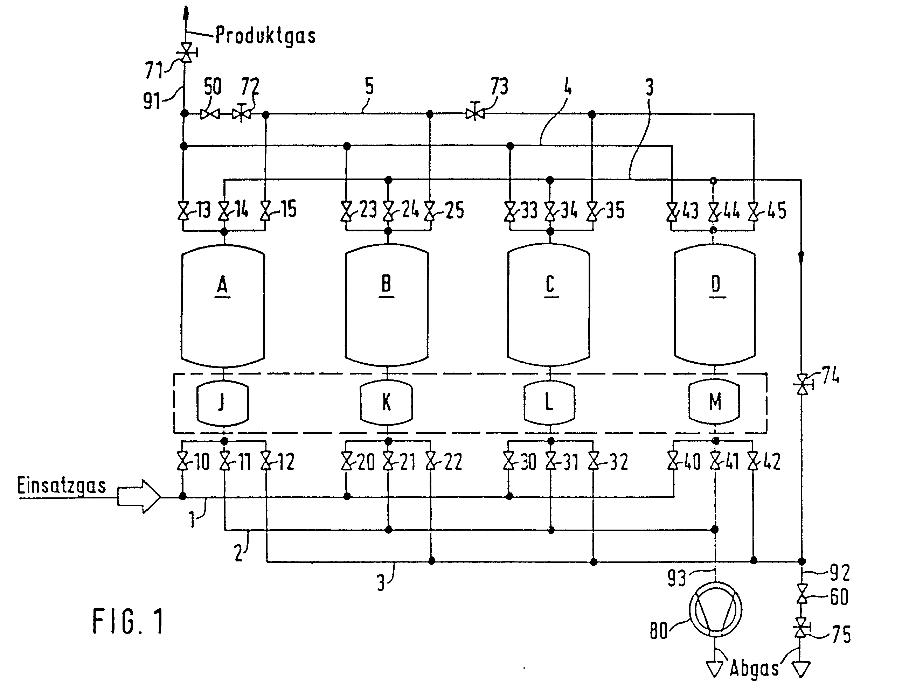

Die Anlage gemäß Fig. 1 besteht aus vier mit einem Kohlenstoffmolekularsieb mit einem mittleren Adsorptionsporendurchmesser zwischen 0,1 und 0,4 nm, vorzugsweise zwischen 0,3 und 0,4 nm, gefüllten Adsorbern A bis D in paralleler Schaltung sowie gegebenenfalls aus vier mit Aktivkohle gefüllten Vorfiltern J, K, L, M, in denen erforderlichenfalls im Einsatzgas vorhandene höhere Kohlenwasserstoffe und Spurenverunreinigungen vor Eintritt in die Adsorber A bis D entfernt werden können. Jeder Adsorber durchläuft zyklisch, zeitversetzt zu den anderen drei Adsorbern, folgende acht Teilschritte :

| T1 | Adsorption |
| T2 | Druckentspannung durch Druckausgleich (Da 1) |
| T3 | Druckentspannung durch Druckausgleich (Da 2) |
| T4 | Gegenstromentspannung (GEE) |
| T5 | Evakuierung (Ev) |
| T6 | Druckaufbau durch Druckausgleich (DA 1) |
| T7 | Druckaufbau durch Druckausgleich (DA 2) |
| T8 | Druckaufbau mit Produktgas (DA 3) |

Bevor Fig. 1 im einzelnen erläutert wird, sei zunächst der Ablauf der acht Teilschritte T1 bis T8 anhand der in Fig. 2 und Fig. 3 gezeigten Druck-Zeit-Profile verdeutlicht.

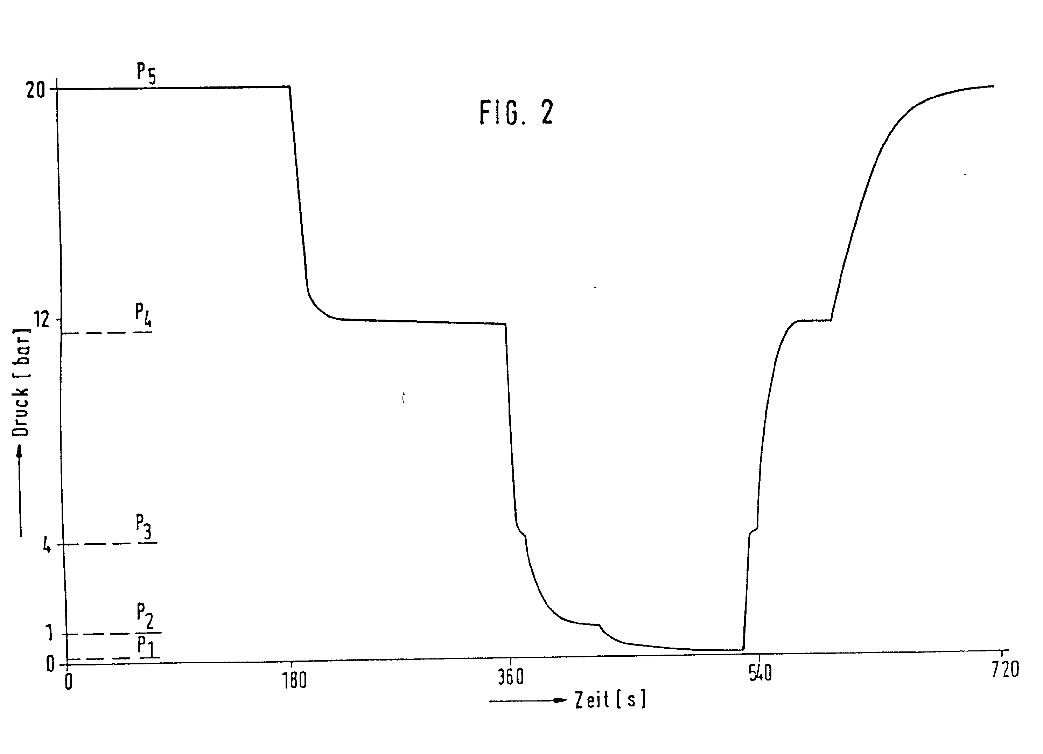

Fig. 2 zeigt beispielhaft für einen Adsorptionsdruck von 20 bar und eine Gesamtzyklenzeit von 720 s das Druck-Zeit-Profil, das in jedem der vier Adsorber, zeitversetzt zu den anderen Adsorbern, abläuft. Auf der Druckachse sind fünf Druckwerte P1 bis P5 markiert, zwischen denen im vorliegenden Beispiel die Druckaufbau- und Druckentspannungsschritte erfolgen.

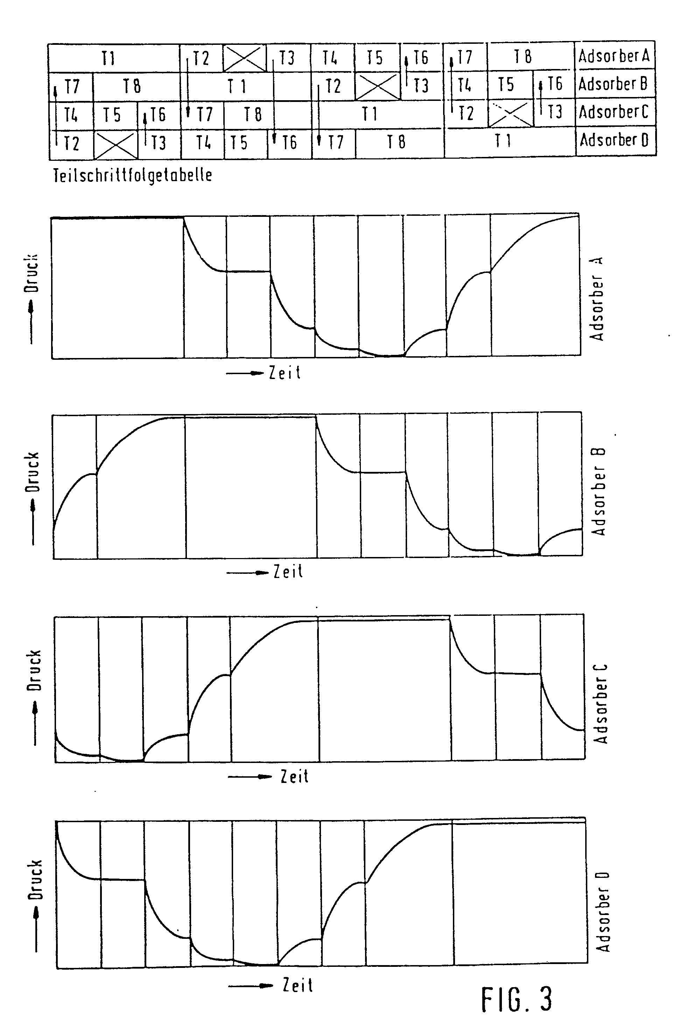

Fig. 3 zeigt die zeitversetzten Druck-Zeit-Profile in den vier Adsorbern A bis D. Beispielhaft wird im folgenden der Verfahrensablauf für den Adsorber A beschrieben, entsprechende Verfahrensabläufe gelten für die anderen drei Adsorber B, C und D.

Die Adsorption (Teilschritt T1) findet bei einem konstanten erhöhten Druck, beispielsweise bei 20 bar, statt. Der Adsorber A wird bei diesem Druck mit dem Einsatzgas durchströmt, wobei Stickstoff, Methan und andere Gaskomponenten vom Kohlenstoff-Molekularsieb adsorbiert werden, so daß Helium, das nicht adsorbiert wird, in hoher Reinheit am Adsorberaustritt abströmt.

Nach der Adsorption wird der beladene Adsorber A durch mehrere Druckentlastungsschritte (Teilschritte T2 bis T5) regeneriert.

Zunächst erfolgt ein erster Druckausgleich Da 1 (Teilschritt T2), wobei das unter Adsorptionsdruck stehende Gas aus Adsorber A im Gleichstrom vom Adsorptionsdruck $P_5$ in den auf einem niedrigeren Druck $P_3$ stehenden Adsorber C entspannt wird. Die Gasabgabe von Adsorber A (T2) zu Adsorber C (T7) wird in der Teilschrittfolgetabelle der Fig. 3 durch einen Pfeil verdeutlicht.

Während des ersten Druckausgleiches (DA 1) wird der Druck im Adsorber A auf einen Druck $P_4$ entspannt, beispielsweise auf 11,7 bar, während gleichzeitig der Druck im Adsorber C von dem Druck $P_3$ auf den Druck $P_4$ ansteigt (Druckaufbau DA 2).

Nach einer kurzen Stillstandzeit (Stand by) erfolgt im Adsorber A ein zweiter Druckausgleich (Da 2, Teilschritt T3), wobei das unter dem Druck $P_4$ stehende Gas aus Adsorber A – wiederum im Gleichstrom – in den auf dem Vakuumenddruck $P_1$ stehenden Adsorber D entspannt wird. Dabei sinkt der Druck im Adsorber A von dem Druck $P_4$ auf einen Druck $P_3$ ab, der beispielsweise 4 bar beträgt. Während beider Druckausgleichsschritte strömt ein heliumangereichertes Gasgemisch von Adsorber A in den Adsorber C bzw. in den Adsorber D über.

Nach den beiden Druckausgleichsschritten (Da 1 und Da 2) wird Adsorber A – im Gegenstrom – von dem

4

Druck $P_3$ auf Atmosphärendruck $P_2$ weiterentspannt (GEE, Teilschritt T4). Hierbei fällt ein heliumarmes Gasgemisch an, in dem die während der Gegenstromentspannung (GEE) desorbierenden Komponenten wie Stickstoff und Methan angereichert sind und das als Abgas verworfen wird.

Anschließend wird Adsorber A mit Hilfe einer Vakuumpumpe 80 auf den Vakuumenddruck $P_1$, beispielsweise 50 mbar, evakuiert (Ev, Teilschritt T5). Hierbei findet eine verstärkte Desorption von Stickstoff und Methan sowie der anderen zuvor im Teilschritt T1 adsorbierten Gaskomponenten statt. Das abgesaugte Gas ist äußerst heliumarm und wird ebenfalls als Abgas verworfen.

Nach der Evakuierung ist die Regeneration des Adsorbers A beendet. Im Adsorber A wird nun der Druck in den Teilschritten T6 bis T8 sukzessive auf den Adsorptionsdruck $P_5$ erhöht.

Zunächst erfolgt ein Druckausgleich (Teilschritt T6) zwischen dem Adsorber A und dem Adsorber B, der zuvor Teilschritt T2 durchlaufen hat und sich am Ende der Evakuierung von Adsorber A auf einem höheren Zwischendruck $P_4$ befindet. Während des Druckausgleiches strömt ein heliumangereichertes Gasgemisch von Adsorber B in den Adsorber A über, wobei das Gasgemisch vorzugsweise im Gleichstrom aus dem Adsorber B abgezogen und im Gleichstrom in den Adsorber A eingeführt wird (Kopf-Boden-Druckausgleich). Dabei steigt der Druck im Adsorber A (Druck-aufbau DA 1) vom Endvakuumdruck $P_1$ auf einen Zwischendruck $P_3$, beispielsweise 4 bar, an, während gleichzeitig der Druck im Adsorber B von dem Zwischendruck $P_4$ auf den Zwischendruck $P_3$ abfällt.

Durch einen weiteren Druckausgleich (Teilschritt T7) mit Adsorber C wird der Druck im Adsorber A (Druckaufbau DA 2) weiter erhöht. Adsorber C hat zuvor den Teilschritt T1, Adsorption, durchlaufen und befindet sich vor dem Druckausgleich mit Adsorber A auf dem Adsorptionsdruck $P_5$. Der Druckausgleich wird im Beispiel so durchgeführt, daß das heliumangereicherte Gasgemisch im Gleichstrom aus dem Adsorber C abgezogen und im Gegenstrom in den Adsorber A entspannt wird (Kopf-Kopf-Druckausgleich). Dabei steigt der Druck im Adsorber A von dem Zwischendruck $P_3$ auf den Zwischendruck $P_4$, beispielsweise 11,7 bar, an, während gleichzeitig im Adsorber C der Druck vom Adsorptionsdruck $P_5$ auf den Zwischendruck $P_4$ abfällt.

Nach dem zweimaligen Druckausgleich wird abschließend mit Produktgas der Druck im Adsorber A von dem höheren Zwischendruck $P_4$ auf den Adsorptionsdruck $P_5$, beispielswiese 20 bar, erhöht (Druckaufbau DA 3, Teilschritt T8). Danach beginnt in Adsorber A ein erneuter Adsorptionsschritt (Teilschritt T1).

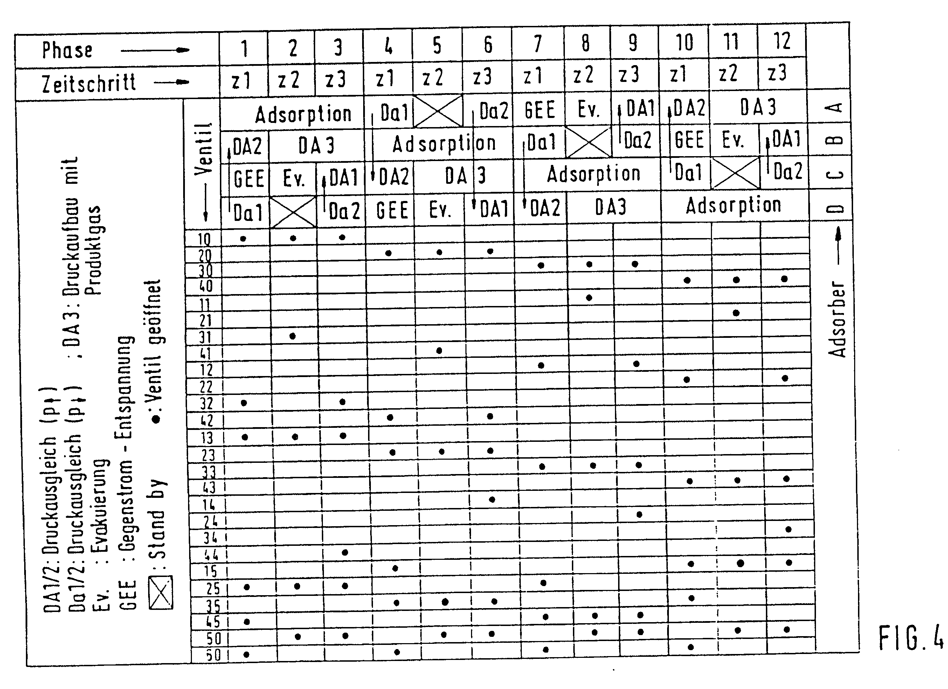

Die vier Adsorber A bis D sind, wie Fig. 1 zeigt, über eine Reihe von Ventilen so geschaltet, daß ständig einer der vier Adsorber auf Adsorption steht und Helium hoher Reinheit als Produktgas erzeugt. Die Schaltung der Ventile ist in Fig. 4 wiedergegeben. Anhand Fig. 4 und Fig. 1 wird im folgenden, beispielhaft für Adsorber A, die Gaszu- und -abführung in der in Fig. 1 dargestellten Druckwechselanlage erläutert. Vor den Adsorbern A bis D können Vorfilter J, K, L, M vorgesehen sein, die Stand der Technik sind und in denen stark adsorbierende Gasbestandteile wie z.B. höhere Kohlenwasserstoffe aus Bohrlochgasen vorabgeschieden werden können. Ihre Betriebsweise ist in der Regel, wie im Beispiel dargestellt, die gleiche wie die der in Reihenschaltung nachgeordneten Haupt-Adsorber A bis D, so daß hierauf im folgenden im einzelnen nicht eingegangen zu werden braucht.

Adsorber A befindet sich nach dem Druckaufbau mit Produktgas (DA 3, Teilschritt T8) auf dem Adsorptionsdruck $P_5$. Während der anschließenden Adsorption (Teilschritt T1) strömt Einsatzgas über eine Leitung 1 bei einem Druck, der zur Überwindung des Druckverlustes in der Anlage geringfügig über dem Adsorptionsdruck liegt, bei geöffneten Ventilen 10 und 13, die in Strömungsrichtung vor bzw. hinter dem Adsorber A angeordnet sind, durch den Adsorber A hindurch. Hierbei werden an dem Kohlenstoff-Molekularsieb außer Helium alle übrigen Komponenten des Einsatzgases wie Stickstoff und Methan adsorbiert, so daß am Kopf des Adsorbers A ein Heliumreichgas über eine Leitung 4 in eine Produktgasleitung 91 abströmt, in der ein Nadelventil 71 angeordnet ist. Die Adsorption ist entsprechend dem Ventilschaltplan in Fig. 4 in drei Zeitschritte Z1, Z2 und Z3 unterteilt. Im Zeitschritt Z1 ist ein in einer Leitung 5 enthaltenes Ventil 50 geschlossen, so daß das gesamte Produktgas über Leitung 4 in die Produktgasleitung 91 strömt. In den Zeitschritten Z2 und Z3 ist Ventil 50 geöffnet, so daß ein Teil des Produktgases über ein nachgeschaltetes Drosselventil 72 und über die Leitung 5 und ein geöffnetes Ventil 25, das Adsorber B vorgeschaltet ist, in den Adsorber B einströmt, der mit dem Produktgas im Teilschritt T8 von dem Zwischendruck $P_4$ auf den Adsorptionsdruck $P_5$ aufgedrückt wird. Die Dauer der drei Zeitschritte Z1, Z2 und Z3 kann beispielsweise bei einer Gesamtzyklenzeit von 720 s 55 s für Zeitschritt Z1, 115 s für Zeitschritt Z2 und 10 s für Zeitschritt Z3 betragen.

Nach der Adsorption wird Adsorber A im Teilschritt T2 (Da 1) auf einen höheren Zwischendruck $P_4$ entspannt, wobei das bei einem geöffnetem Ventil 15 (Ventil 50 ist geschlossen) aus dem Adsorber A abströmende Gas in einem Kopf-Kopf-Druckausgleich über ein Drosselventil 73 in Leitung 5 bei geöffnetem Ventil 35 in Adsorber C einströmt, der dabei im Teilschritt T7 von einem Zwischendruck $P_3$ auf einen Zwischendruck $P_4$ aufgedrückt wird. Entsprechend dem Ventilschaltplan in Fig. 4 wird für diesen Druckausgleich (Da 1) ein Zeitschritt Z1 benötigt, der im Beispiel bei einer Gesamtzyklenzeit von 720 s eine Dauer von 55 s hat.

Nach diesem ersten Druckausgleich und einer Stillstandzeit (Stand by), die beispielsweise bei einer Gesamtzyklenzeit von 720 s eine Dauer von 115 s hat, wird Adsorber A im Teilschritt T3 (Da 2) über einen weiteren Druckausgleich mit Adsorber D vom höheren Zwischendruck $P_4$ auf einen niedrigeren Zwischendruck $P_3$ weiterentspannt. Hierzu wird bei geöffneten Ventilen 14 und 42 Gas aus dem Adsorber A über eine Ringleitung 3 (Ventil 60 in Leitung 92 ist geschlossen) und ein Drosselventil 74 in den Adsorber D entspannt, der dabei im Teilschritt T6 von dem Endvakuumdruck $P_1$ auf den Zwischendruck $P_3$ aufgedrückt wird. Der Druckausgleich erfolgt somit im Beispiel, wie beschrieben, als Kopf-Boden-Druckausgleich. Entsprechend dem Ventilschaltplan in Fig. 4 wird für den Druckausgleich Da 2 ein Zeitschritt Z3 benötigt, der im Beispiel bei einer Gesamtzyklenzeit von 720 s eine Dauer von 10 s hat.

Anschließend wird Adsorber A im Teilschritt T4 (GEE) bei geöffneten Ventilen 12 und 60 über Drosselventil 75 im Gegenstrom vom Zwischendruck $P_3$ auf Amosphärendruck $P_2$ weiterentspannt. Das dabei abströmende Gas wird in eine Abgasleitung 92 eingespeist. Bei einer Gesamtzyklenzeit von 720 s hat die Gegenstromentspannung im Beispiel eine Dauer von 55 s.

Nach der Gegenstromentspannung wird Adsorber A im Teilschritt T5 (Ev) bei geöffnetem Ventil 11 mit Hilfe der Vakuumpumpe 80 vom Atmosphärendruck $P_2$ auf den Endvakuumdruck $P_1$, beispielsweise auf 50 mbar, evakuiert. Das dabei abgesaugte heliumarme Gasgemisch wird in eine Abgasleitung 93 eingespeist. Bei einer Gesamtzyklenzeit von 720 s hat die Evakuierung im Beispiel eine Dauer von 115 s.

Der evakuierte Adsorber A wird anschließend im Teilschritt T6 (DA 1) in einem Druckausgleich mit Adsorber B, der vorzugsweise als Kopf-Boden-Druckausgleich ausgeführt wird, vom Endvakuumdruck $P_1$ auf den Zwischendruck $P_3$ aufgedrückt. Dabei wird ein heliumangereichertes Gasgemisch vom Austrittsende des Adsorbers B bei geöffneten Ventilen 24 und 12 (Ventil 60 ist geschlossen) über die Ringleitung 3 und Drosselventil 74 in das Eintrittsende des Adsorbers A entspannt. Adsorber B durchläuft dabei den Teilschritt T3. Bei dem Druckausgleich fällt der Druck im Adsorber B von dem Zwischendruck $P_4$ auf den Zwischendruck $P_3$. Bei einer Gesamtzyklenzeit von 720 s dauert der Druckausgleich DA 1 im Beispiel 10 s.

Der auf den Zwischendruck $P_3$ teilaufgedrückte Adsorber A wird anschließend im Teilschritt T7 (DA 2) durch einen weiteren Druckausgleich mit dem Adsorber C weiter auf den Zwischendruck $P_4$ aufgedrückt. Dieser Druckausgleich wird vorzugsweise als Kopf-Kopf-Druckausgleich in der Art durchgeführt, daß ein heliumangereichertes Gasgemisch vom Austrittsende des Adsorbers C bei geöffneten Ventilen 35 und 15 über Drosselventil 73 in der Leitung 5 in das Austrittsende des Adsorbers A entspannt wird. Adsorber c durchläuft dabei den Teilschritt T2, wobei der Druck im Adsorber C vom Adsorptionsdruck $P_5$ auf den Zwischendruck $P_4$ abfällt. Die Zeit für den Druckausgleich DA 2 beträgt bei einer Gesamtzyklenzeit von 720 s im Beispiel 55 s.

Abschließend wird Adsorber A im Teilschritt T8 (DA 3) mit Produktgas vom Zwischendruck $P_4$ auf den Adsorptionsdruck $P_5$ aufgedrückt. Hierzu wird ein Teil des Produktgases bei geöffneten Ventilen 50 und 15 überDrosselventil 72 in den Adsorber A geleitet. Der Druckaufbau DA 3 setzt sich gemäß dem Ventilschaltplan in Fig. 4 aus den beiden Zeitschritten Z2 und Z3 zusammen, die bei einer Gesamtzyklenzeit von 720 s im Beispiel eine Dauer von 115 bzw. 10 s haben.

Nach dem Druckaufbau DA 3 mit Produktgas beginnt in Adsorber A ein neuer Druckwechselzyklus, der wieder mit dem Adsorptionsschritt beginnt. Entsprechend läuft der Druckwechselzyklus in den Adsorbern B, C und D ab, jedoch zeitverschoben, wie aus der Fig. 3 ablesbar ist.

Die Regeneration des Adsorptionsmittels wird, wie beschrieben, durch einen Evakuierungsschritt erreicht. Zwar ließen sich die hier aus dem heliumhaltigen Einsatzgas zu entfernenden Gaskomponenten, wie Stickstoff und Methan, nach dem Stand der Technik auch durch eine Spülung mit Produktgas desorbieren. Eine derartige Spüldesorption würde aber bei der Heliumgewinnung aus Erd- und Bohrlochgasen mit einem Heliumgehalt von max. 8 Vol.-% zu extrem hohen Ausbeuteverlusten für Helium führen, da aufgrund des niedrigen Heliumgehaltes im Einsatzgas nur eine geringe Heliumreichgasmenge als Produktgas anfällt und gleichzeitig große Gasmengen desorbiert werden müssen, denn die durch Adsorption zu entfernenden und wieder zu desorbierenden Gaskomponenten haben im Einsatzgas einen Anteil von mindestens 92 Vol.-%.

## Beispiele

In einer Labordruckwechselanlage gemäß Fig. 1 (jedoch ohne Vorfilter J, K, L, M) wurden bei einem Adsorptionsdruck von 20 bar, einem Vakuumenddruck von 50 mbar und einer Gesamtzyklenzeit von 720 s, entsprechend 5 Zyklen/h, Trennversuche mit einem Gasgemisch durchgeführt, in dem keine Verunreinigungen, wie z.B. höhere Kohlenwasserstoffe, enthalten waren und das nur Helium (ca. 5 Vol.-%), Methan (ca. 29 Vol.-%) und Stickstoff (ca. 66 Vol.-%) enthielt. Die vier Adsorber A bis D waren mit einem Kohlenstoffmolekularsieb mit einem mittleren Adsorptionsporendurchmesser von 0,35 nm gefüllt und hatten ein Füllvolumen von 2 l/Adsorber. In den Versuchen wurde durch eine Verstellung des Nadelventils 71 die erzeugte Produktgasmenge verändert und hierdurch die Heliumreinheit im Produktgas variiert. Die nachfolgend in den Tabellen 1 bis 4 aufgeführten Versuchsergebnisse belegen, daß mit dem erfindungsgemäßen Verfahren Helium aus einem Einsatzgas mit einem Heliumgehalt von < 8 Vol.-% auf eine Heliumreinheit von 75-95 Vol.-% im Produktgas der ersten Adsorptionsstufe (I) angereichert werden kann, wobei je nach Heliumreinheit im Produktgas der ersten Adsorptionsstufe (I) eine Heliumausbeute von 90-99,9% erreicht wird. Die Versuchsergebnisse sind nachfolgend in Form einer vollständigen Massenbilanz wiedergegeben.

### Tabelle 1

|  | Konzentration (Vol.-%) | | | Menge (Nl/h) |
|---|---|---|---|---|
|  | He | $CH_4$ | $N_2$ |  |
| Einsatzgas | 5,1 | 28,9 | 66,0 | 602,2 |
| Abgas aus Evakuierung | 0,7 | 23,1 | 76,2 | 191,3 |
| Abgas aus Gegenstromentspannung | 0,5 | 34,0 | 65,5 | 381,7 |
| Produktgas | 95,0 | -- | 5,0 | 29,2 |

Hieraus errechnet sich eine He-Ausbeute von 90,3 %.

### Tabelle 2

|  | Konzentration (Vol.-%) | | | Menge (Nl/h) |
|---|---|---|---|---|
|  | He | $CH_4$ | $N_2$ |  |
| Einsatzgas | 5,3 | 28,9 | 65,8 | 593,6 |
| Abgas aus Evakuierung | 0,2 | 23,8 | 76,0 | 188,5 |
| Abgas aus Gegenstromentspannung | 0,2 | 34,1 | 65,7 | 371,5 |
| Produktgas | 90,0 | -- | 10,0 | 33,6 |

Hieraus errechnet sich eine He-Ausbeute von 96,1 %.

## Tabelle 3

| | Konzentration (Vol.-%) | | | Menge (Nl/h) |
|---|---|---|---|---|
| | He | $CH_4$ | $N_2$ | |
| Einsatzgas | 5,1 | 28,6 | 66,3 | 604,1 |
| Abgas aus Evakuierung | - | 24,5 | 75,5 | 190,4 |
| Abgas aus Gegenstromentspannung | < 0,1 | 33,7 | 66,2 | 375,2 |
| Produktgas | 80,0 | -- | 20,0 | 38,5 |

Hieraus errechnet sich eine He-Ausbeute von 99,9 %.

## Tabelle 4

| | Konzentration (Vol.-%) | | | Menge (Nl/h) |
|---|---|---|---|---|
| | He | $CH_4$ | $N_2$ | |
| Einsatzgas | 5,4 | 28,5 | 66,1 | 609,4 |
| Abgas aus Evakuierung | - | 26,0 | 74,0 | 194,1 |
| Abgas aus Gegenstromentspannung | < 0,1 | 33,1 | 66,8 | 372,4 |
| Produktgas | 76,4 | -- | 23,6 | 42,9 |

Hieraus errechnet sich eine He-Ausbeute von 99,6 %.

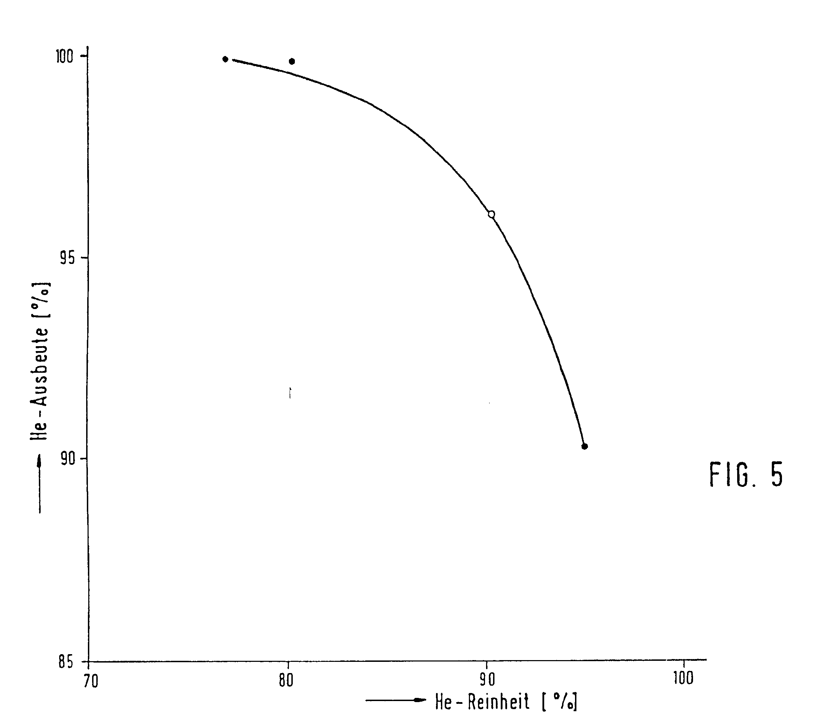

Mit steigender Heliumreinheit nimmt die Heliumausbeute ab und umgekehrt. Der Zusammenhang zwischen Heliumreinheit und Heliumausbeute ist in Fig. 5 wiedergegeben.

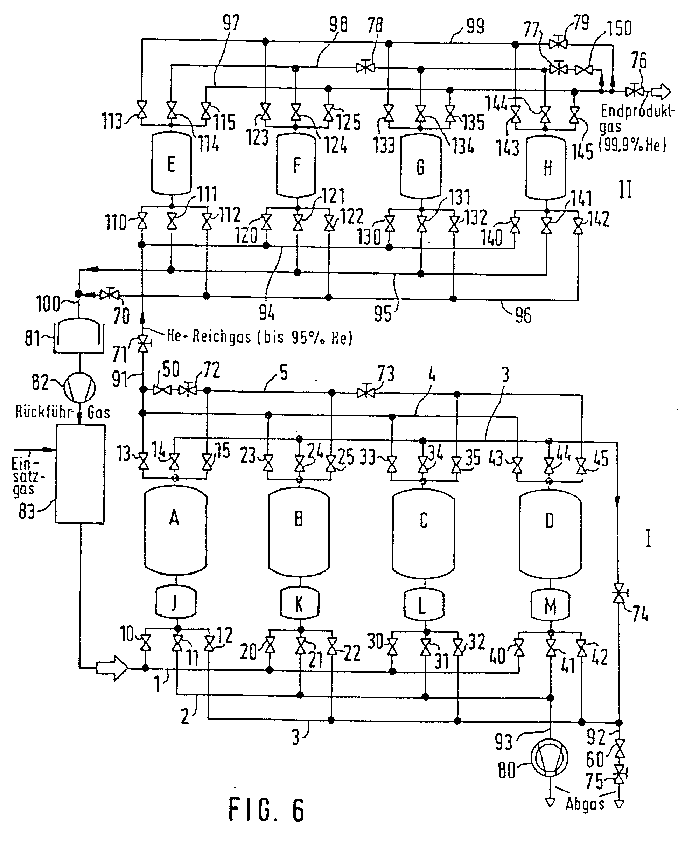

Eine höhere Heliumreinheit von bis zu > 99,9 Vol.-% bei gleichzeitig hoher Heliumausbeute läßt sich erzeugen, wenn das in einer Druckwechselanlage I gemäß Fig. 1 erzeugte Heliumreichgas mit einer Heliumkonzentration von bis zu 95 Vol.-% in einer nachgeschalteten Druckwechselanlage II weiter aufgetrennt und das heliumhaltige Abgas aus der Druckwechselanlage II zur Druckwechselanlage I zurückgeführt und dort mit dem Einsatzgas der Druckwechselanlage I vermischt und gemeinsam in der Druckwechselanlage I aufgetrennt wird. Das Verfahrensfließbild der Hintereinanderschaltung von zwei Druckwechselanlagen I und II mit Abgasrückführung ist in Fig. 6 gezeigt.

Die Druckwechselanlage II umfaßt wie die vorgeschaltete Druckwechselanlage I, die mit vier Adsorbern A bis D bestückt ist, vier Adsorber E bis H, die mit einem Kohlenstoffmolekularsieb mit einem mittleren Adsorptionsporendurchmesser von 0,35 nm gefüllt sind. Der Verfahrensablauf in der nachgeschalteten Druckwechselanlage II setzt sich aus sechs Teilschritten T1.2 bis T 6.2 zusammen, die jeder Adsorber E bis H zeitversetzt zu den anderen drei Adsorbern zyklisch nacheinander durchläuft:

T1.2 Adsorption
T2.2 Druckentspannung durch Druckausgleich (Da 1)
T3.2 Gegenstromentspannung (GEE)
T4.2 Spülung mit Produktgas
T5.2 Druckaufbau durch Druckausgleich (DA 1)
T6.2 Druckaufbau mit Produktgas (DA 2)

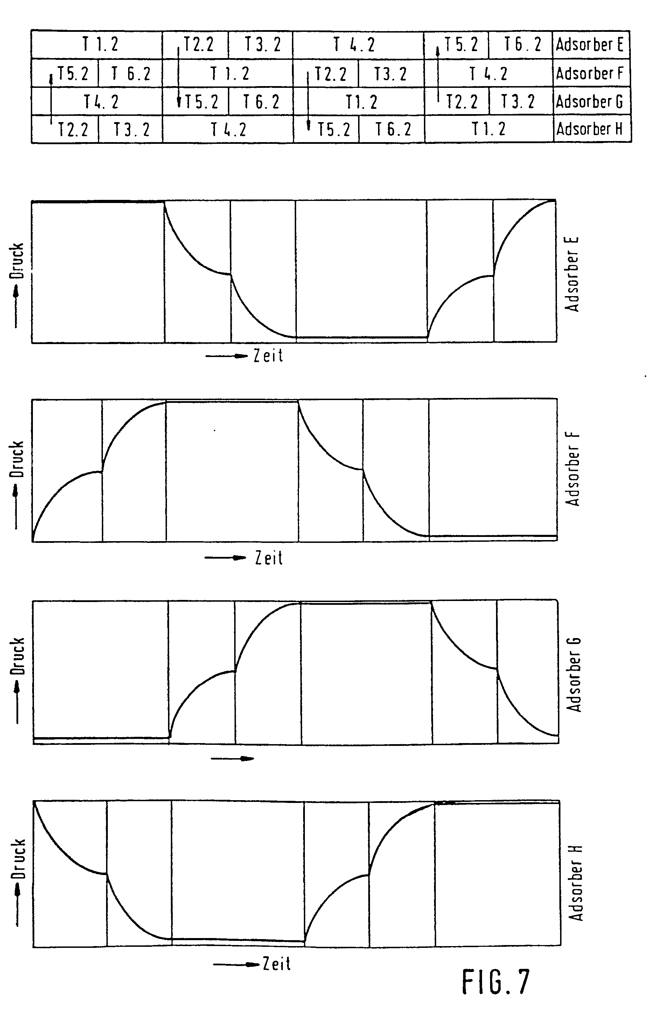

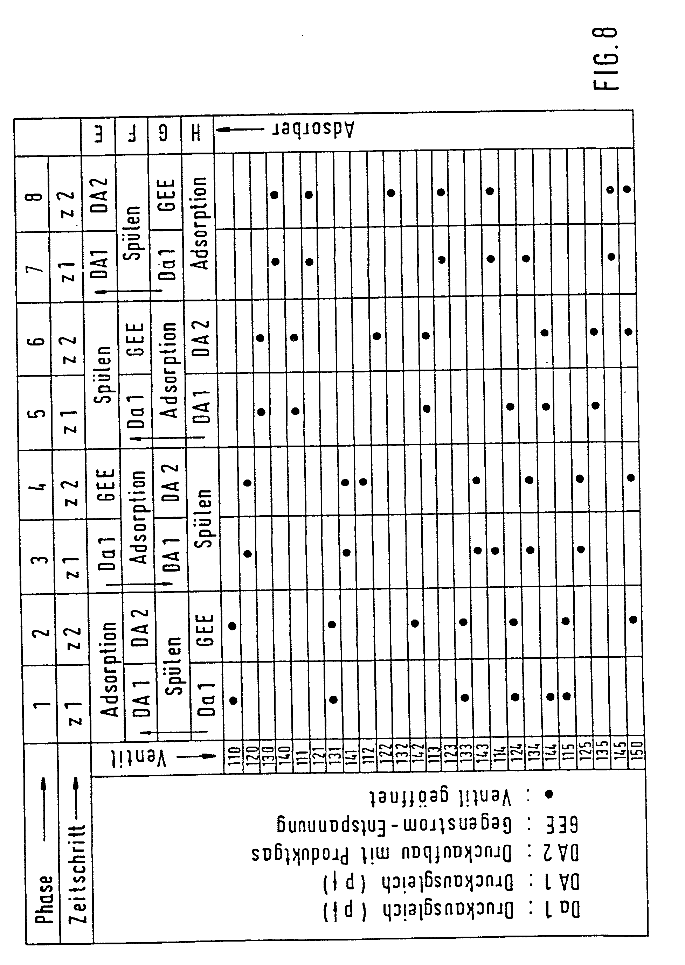

Der zyklische, zeitversetzte Ablauf dieser sechs Teilschritte T1.2 bis T6.2 in den vier Adsorbern E bis H wird anhand der in Fig. 7 gezeigten Druck-Zeit-Profile verdeutlicht. Die Teilschritte T1.2 bis T6.2 laufen so ab, daß jeweils immer ein Adsorber auf Adsorption steht und hochreines Helium als Produktgas produziert. Hierdurch ist eine kontinuierliche Erzeugung von hochreinem Helium gewährleistet. Die entsprechende Schaltsequenz der Ventile ist in Fig. 8 wiedergegeben.

Anhand der Fig. 6 und Fig. 8 wird im folgenden die Gasführung in der Druckwechselanlage II am Beispiel des Adsorbers E erläutert. Dabei wird das Produktgas der Druckwechselanlage I, das als Einsatzgas in die Druckwechselanlage II geführt wird, als Heliumreichgas (Heliumgehalt bis 95 Vol.-%) und das Produktgas der Druckwechselanlage II als Endproduktgas (hochreines Helium mit einem Heliumgehalt von über 99,9 Vol.-%) bezeichnet.

Adsorber E befindet sich nach einem Druckaufbau mit dem Endproduktgas auf einem erhöhten Druck $P_{3.2}$, dem Adsorptionsdruck, in der nachgeschalteten Druckwechselanlage II, der höher, niedriger oder gleich hoch liegen kann wie der Adsorptionsdruck $P_5$ in der vorgeschalteten Druckwechselanlage I. Im ersten Fall kann das Heliumreichgas mit einem hier nicht dargestellten zwischengeschalteten Kompressor von $P_5$ auf $P_{3.2}$ verdichtet werden, im zweiten Fall kann das Heliumreichgas beispielsweise mit einem hier ebenfalls nicht dargestellten zwischengeschalteten Druckminderer von $P_5$ auf $P_{3.2}$ entspannt werden. Fig. 6 zeigt eine Anlage, in der die Adsorptionsdrücke $P_5$ und $P_{3.2}$ gleich hoch liegen. Nach dem Druckaufbau strömt während der anschließenden Adsorption im Teilschritt T1.2 Heliumreichgas über eine Leitung 94 bei geöffneten Ventilen 110 und 115 bei einem Druck $P_{3.2}$ durch den Adsorber E. Hierbei werden die Restverunreinigungen, im wesentlichen Stickstoff, aus dem Heliumreichgas durch Adsorption entfernt, so daß hochreines Helium mit einer Reinheit von über 99,9 Vol.-% als Endproduktgas über eine Leitung 97 und ein Nadelventil 76 (Stellventil) die Anlage mit einem Druck verläßt, der, bedingt durch die Druckverluste, geringfügig unter dem Druck $P_{3.2}$ liegt. Je nach Verwendungszweck kann das hochreine Helium entweder direkt genutzt, zwecks Speicherung und/oder Weitertransport in Container oder Gasflaschen komprimiert und gasförmig bei hohem Druck gespeichert werden, in Pipelines – gegenbenenfalls nach einer Nachverdichtung – eingespeist oder in Kälteanlagen verflüssigt werden.

Nach der Adsorption wird Adsorber E im Teilschritt T2.2 durch Druckausgleich (Da 1) mit dem Adsorber G auf einen Zwischendruck $P_{2.2}$ entspannt. Hierzu werden die Adsorber E und G durch Öffnen von Ventilen 114 und 134 (Ventil 150 ist geschlossen) gasmäßig miteinander verbunden, wobei heliumreiches Gas aus dem Adsorber E über eine Leitung 98 und ein Drosselventil 78 in den zuvor gespülten Adsorber G entspannt wird, der dabei vom Spüldruck $P_{1.2}$ auf den Zwischendruck $P_{2.2}$ aufgedrückt wird. Der Druckausgleich erfolgt bevorzugt als Kopf-Kopf-Druckausgleich.

Nach dem Druckausgleich (Da 1) wird Adsorber E im Teilschritt T3.2 im Gegenstrom auf einen niedrigsten Druck $P_{1.2}$ entspannt (GEE), der bevorzugt bei Atmosphärendruck liegt. Hierzu wird ein Ventil 112 geöffnet. Das dabei aus dem Adsorber E abströmende Gasgemisch hat einen Heliumgehalt, der wesentlich über dem Heliumgehalt des in die vorgeschaltete Druckwechselanlage I einströmenden Einsatzgases liegt, und wird deshalb über eine Leitung 96 und ein Drosselventil 70 zum Eingang der vorgeschalteten Druckwechselanlage I zurückgeführt. Hierbei wird das Entspannungsgas, dessen Zusammensetzung und Volumenstrom sich während der Entspannung ändert, zunächst zwecks Vergleichmäßigung in einen in Leitung 100 angeordneten Puffer 81 geleitet, dort mit dem im Teilschritt T4.2 anfallenden und ebenfalls zurückgeführten Spülgas vermischt und anschließend über einen Kreislaufkompressor 82 auf den Adsorptionsdruck $P_5$ der vorgeschalteten Druckwechselanlage I verdichtet und in einen Mischbehälter 83 gedrückt, in dem das Rückführgas aus Druckwechselanlage II mit dem Einsatzgas für die Druckwechselanlage I vermischt wird.

Anschließend wird Adsorber E im Teilschritt T4.2 zwecks Regeneration des beladenen Adsorptionsmittels mit dem Endproduktgas bei dem Enddruck der Gegenstromentspannung $P_{1.2}$ gespült. Hierzu wird ein Teilstrom des Endproduktgases über eine Leitung 99 und ein Drosselventil 79 bei geöffneten Ventilen 113 und 111 im Gegenstrom durch den Adsorber E geleitet. Bei der Spülung desorbieren die aus dem Heliumreichgas zuvor entfernten Verunreinigungen, im wesentlichen Stickstoff. Auch das am unteren Adsorberende abströmende Spülgas hat einen Heliumgehalt, der wesentlich über dem Heliumgehalt des Einsatzgases liegt. Das Spülabgas wird deshalb ebenfalls zum Eintritt der vorgeschalteten Druckwechselanlage I zurückgeführt, und zwar in der gleichen Weise, wie zuvor für das Gegenstromentspannungsgas beschrieben worden ist.

Nach der Spülung wird Adsorber E im Teilschritt T5.2 durch Druckausgleich mit dem Adsorber G, der zuvor die Adsorption beendet hat, auf einen Zwischendruck $P_{2,2}$ aufgedrückt. Hierzu werden Ventile 114 und 134 geöffnet (Ventil 150 ist geschlossen) und heliumreiches Gas aus dem Adsorber G über Leitung 98 und Drosselventil 78 in den Adsorber E entspannt. Dabei sinkt der druck im Adsorber G vom Adsorptionsdruck $P_{3,2}$ auf den Zwischendruck $P_{2,2}$ ab.

Abschließend wird Adsorber E im letzten Teilschritt T6.2 mit dem Endproduktgas auf den Adsorptionsdruck $P_{3,2}$ aufgedrückt. Hierzu wird ein Teilstrom des Endproduktgases über Leitung 98 bei geöffneten Ventilen 150 und 114 über Drosselventile 77 und 78 in den Adsorber E geleitet. Danach beginnt mit der Adsorption ein neuer Druckwechselzyklus im Adsorber E. Entsprechend läuft der Druckwechselzyklus in den Adsorbern F, G und H ab, jedoch zeitverschoben, wie aus Fig. 7 ersichtlich ist.

Die Gesamtzyklenzeit in der nachgeschalteten Druckwechselanlage II kann unabhängig von der Gesamtzyklenzeit in der vorgeschalteten Druckwechselanlage I gewählt werden. Sie kann länger, kürzer oder gleich lang sein, je nach Reinheit des Heliumreichgases und den gewählten Adsorptionsdrücken $P_5$ bzw. $P_{3,2}$. Je nach Gesamtzyklenzeit werden für die Teilschritte T1.2 bis T6.2 unterschiedlich lange Zeiten benötigt. Für eine Gesamtzyklenzeit von beispielsweise 1600 s wurde mit folgender Zeiaufteilung eine hohe Heliumreinheit bei gleichzeitig hoher Heliumausbeute erreicht :

| | |
|---|---|
| Adsorption | 400 s |
| Druckausgleich Da 1.2 | 200 s |
| Gegenstromentspannung | 200 s |
| Spülung | 400 s |
| Druckausgleich DA 1.2 | 200 s |
| Druckaufbau DA 2.2 | 200 s |

Andere Zeitaufteilungen sind möglich.

## Beispiel

Hinter die bereits beschriebene und in den Versuchen 1 bis 4 benutzte Labordruckwechselanlage I (4 Adsorber A bis D mit einem Füllvolumen von 2 l/Adsorber) wurde eine zweite kleinere Labordruckwechselanlage II (4 Adsorber mit einem Füllvolumen von 0,15 l/Adsorber) geschaltet, in der das in der vorgeschalteten Druckwechselanlage I produzierte Heliumreichgas weiter aufgetrennt wurde. Die Gesamtanlage hatte einen Aufbau gemäß Fig. 6 (jedoch ohne Vorfilter in Anlage I). Das in der nachgeschalteten Druckwechselanlage II während der Gegenstromentspannung und Spülung anfallende Gasgemisch wurde gemäß Fig. 6 wieder zum Eingang der vorgeschalteten Druckwechselanlage I zurückgeführt. Die Adsorber beider Anlagen waren mit einem Kohlenstoffmolekularsieb mit einem mittleren Adsorptionsporendurchmesser von 0,35 nm gefüllt. Die vorgeschaltete Druckwechselanlage I wurde wie in den Versuchen 1 bis 4 bei einem Adsorptionsdruck von 20 bar, einem Endvakuumdruck von 50 mbar und einer Gesamtzyklenzeit von 720 s betrieben. Der Adsorptionsdruck in der nachgeschalteten Druckwechselanlage II betrug ebenfalls 20 bar, die Gesamtzyklenzeit lag bei 1600 s.

In der vorgeschalteten Druckwechselanlage I wurde ein Heliumreichgas mit einer Heliumkonzentration von 79,5 Vol.-% erzeugt, das in der nachgeschalteten Druckwechselanlage II weiter zu Reinsthelium mit einem Heliumgehalt von über 99,9 Vol.-% verarbeitet wurde. Die Mengen und die Zusammensetzungen der verschiedenen Teilgasströme sind nachfolgend aufgeführt.

Tabelle 5

| | Konzentration (Vol.-%) | | | Menge (1/h (i.N.)) |
|---|---|---|---|---|
| | He | CH$_4$ | N$_2$ | |
| **Stufe I** | | | | |
| Einsatzgas | 5,4 | 28,5 | 66,1 | 592,3 |
| Rückführgas aus 2. Stufe | 41,5 | -- | 58,5 | 17,1 |
| Produktgas | 79,5 | -- | 20,5 | 48,9 |
| Abgas aus Gegenstromentspannung | < 0,1 | 32,6 | 67,4 | 368,1 |
| Abgas aus Evakuierung | -- | 25,5 | 74,5 | 192,4 |
| **Stufe II** | | | | |
| Einsatzgas | 79,5 | -- | 20,5 | 48,9 |
| Endproduktgas | > 99,9 | -- | < 0,1 | 31,7 |
| Gas aus Gegenstromentspannung[1] | 43,6 | -- | 56,4 | 14,0 |
| Gas aus Spülung[1] | 32,2 | -- | 67,8 | 3,1 |

[1] Rückführgas zur Stufe I

Aus 592,3 l/h (i. N.) Einsatzgas mit einem Heliumanteil von 5,4 Vol.-% wurde 31,7 l/h (i. N.) Reinsthelium mit einer Reinheit von über 99,9 Vol.-% gewonnen. Hieraus errechnet sich für die zweistufige Anreicherung von Helium mittels Druckwechseladsorption und integrierter Abgasrückführung eine Heliumausbeute von 99,1%.

**Patentansprüche**

1. Verfahren zur Heliumgewinnung nach einem Druck-Wechsel-Adsorptions-Prozeß aus Gasgemischen, die Helium, Stickstoff und Methan sowie gegebenenfalls weitere Gase enthalten und durch Kohlenstoffmolekularsiebe mit einem mittleren Adsorptionsporendurchmesser zwischen 0,1 und 0,4 nm, vorzugsweise zwischen 0,3 und 0,4 nm geleitet werden, die Stickstoff und Methan sowie gegebenenfalls die weiteren Gase adsorbieren, wobei das Gasgemisch zyklisch vier parallel geschalteten Adsorbern (E, F, G, H) aufgegeben wird, die jeweils nacheinander eine Druckaufbauphase, eine Adsorptionsphase und eine Druckentlastungsphase zur Regeneration durchlaufen, wobei der Druckaufbau zunächst durch Druckausgleich mit einem zu regenerierenden Adsorber und dann mit Produktgas erfolgt, während die Regeneration mit Druckausgleich beginnt, woran sich die Entspannung und Spülung mit Produktgas anschließt, **gekennzeichnet durch** die Kombination dieser Verfahrensstufe, die als nachgeschaltete Adsorptionsstufe (II) bezeichnet ist, mit folgenden weiteren Verfahrensstufen :

a) in einer Vorfilterstufe (V), deren Adsorber (J, K, L, M) mit Aktivkohle gefüllt sind, werden höhere Kohlenwasserstoffe sowie gegebenenfalls weitere Verunreinigungen aus dem heliumhaltigen Gasgemisch entfernt ;

b) die Adsorber (J, K, L, M) der Vorfilterstufe (V) sind betriebsmäßig Adsorbern (A, B, C, D) einer ersten Adsorptionsstufe (I) zugeordnet ;

c) die Adsorber (A, B, C, D) der ersten Adsorptionsstufe (I) sind mit den gleichen Kohlenstoffmolekularsieben wie die nachgeschaltete Adsorptionsstufe (II) gefüllt und werden zur Heliumanreicherung unter Zurückführung des Abgases aus der nachgeschalteten Adsorptionsstufe (II) in das Einsatzgas der ersten Adsorptionsstufe (I) in jeweils mehreren Schritten auf Adsorptionsdruck aufgedrückt und nach Adsorption entspannt ; wobei

ca) die Druckaufbauphase drei Schritte umfaßt :

1. Druckaufbauschritt von einem Endvakuumdruck ($P_1$) auf eine mittlere Druckstufe ($P_3$) ;

2. Druckaufbauschritt von der mittleren Druckstufe ($P_3$) zu einer höheren Druckstufe ($P_4$) ;

3. Druckaufbauschritt von der höheren Druckstufe ($P_4$) zur höchsten Druckstufe ($P_5$) – Adsorptionsdruck ;

cb) die Druckentlastungsphase vier Schritte umfaßt :

1. Druckentlastungsschritt von der höchsten Druckstufe ($P_5$) zur höheren Druckstufe ($P_4$) ;

2. Druckentlastungsschritt von der höheren Druckstufe ($P_4$) zur mittleren Druckstufe ($P_3$) ;

3. Druckentlastungsschritt von der mittleren Druckstufe ($P_3$) zum Atmosphärendruck ($P_2$) ;

4. Druckentlastungsschritt vom Atmosphärendruck ($P_2$) auf den Endvakuumdruck ($P_1$) ;

cc) der Druckausgleich in zwei Stufen erfolgt, wobei in der ersten Stufe vom Ausgang eines ersten Adsorbers, der den 1. Entlastungsschritt (von $P_5$ auf $P_4$) durchführt, zum Ausgang eines zweiten Adsorbers entspannt wird, der den 2. Druckaufbauschritt (von $P_3$ auf $P_4$) durchführt, und in der zweiten Stufe vom Ausgang des ersten Adsorbers, der den 2. Entlastungsschritt (von $P_4$ auf $P_3$) durchführt, zum Eingang eines dritten Adsorbers entspannt wird, der den 1. Druckaufbauschritt (von $P_1$ auf $P_3$) durchführt, und

cd) der 3. Entlastungsschritt und der 4. Entlastungsschritt im Gegenstrom erfolgen, wobei ein heliumarmes Abgas anfällt, und der 3. Druckaufbauschritt mit Produktgas vorgenommen wird.

2. Verfahren nach Anspruch 1, **dadurch gekennzeichnet,** daß die höchste Druckstufe ($P_5$) – Adsorptionsdruck – über 1 bar, vorzugsweise 10-30 bar, und der Endvakuumdruck unter 500 mbar, vorzugsweise 50 mbar betragen.

3. Verfahren nach Anspruch 2, **dadurch gekennzeichnet,** daß den einzelnen Druckstufen folgende Druckwerte zugeordnet sind :

$P_1 =$ 50 mbar
$P_2 =$ 1 bar
$P_3 =$ 4 bar
$P_4 =$ 11,7 bar
$P_5 =$ 20 bar

4. Verfahren nach einem den Ansprüchen 1 bis 3, **dadurch gekennzeichnet,** daß die Gesamtzyklenzeit 450 bis 3600 s beträgt, vorzugsweise 720 s.

5. Verfahren nach Anspruch 4, **dadurch gekennzeichnet,** daß die Druckentlastungsphase bei einer Gesamtzyklenzeit von 720 s folgende Zeitintervalle umfaßt :

```
1. Entlastungsschritt von P  auf P        55 s
                            5      4
   Ruhestellung                           115 s
2. Entlastungsschritt von P  auf P        10 s
                            4      3
3. Entlastungsschritt von P  auf P        55 s
                            3      2
4. Entlastungsschritt von P  auf P        115 s
                            2      1
```

6. Verfahren nach Anspruch 4, **dadurch gekennzeichnet,** daß die Druckaufbauphase bei einer Gesamtzyklenzeit von 720 s folgende Zeitintervalle umfaßt :

```
1. Druckaufbauschritt von P  auf P       10 s
                            1      3
2. Druckaufbauschritt von P  auf P       55 s
                            3      4
3. Druckaufbauschritt von P  auf P      125 s
                            4      5
```

7. Verfahren nach Anspruch 4, **dadurch gekennzeichnet,** daß die Produktgasgewinnung bei einer Gesamtzyklenzeit von 720 s ein Zeitintervall von 180 s umfaßt.

8. Verfahren nach Anspruch 1, **dadurch gekennzeichnet,** daß der Heliumanteil im Einsatzgas < 10 Vol.-%, vorzugsweise 2-8 Vol.-% beträgt.


**Claims**

1. A process for helium enrichment according to a pressure-change adsorption process from gas mixtures containing helium, nitrogen and methane and, where present, further gases and conveyed through carbon molecular sieves with an average adsorption pore diameter of between 0.1 and 0.4 nm, preferably between 0.3 and 0.4 nm, which adsorb nitrogen and methane and, where present, the further gases, the gas mixture being delivered cyclically to four adsorbers (E, F, G, H) which are arranged in parallel and which each pass in succession through a pressure build-up phase, an adsorption phase and a pressure release phase for regeneration, the pressure build-up first taking place by pressure equalization with an adsorber to be regenerated and then with product gas, while the regeneration begins with pressure equalization, which is followed by the release and flushing with product gas, characterized by the combination of this process stage, which is designated as the subsequent adsorption stage (II), with the following further process steps :

a) in a pre-filtering stage (V), the adsorbers (J, K, L, M) of which are filled with active carbon, higher hydrocarbons and, where present, further impurities are removed from the helium-containing gas mixture ;

b) the adsorbers (J, K, L, M) of the pre-filtering stage (V) are associated in their operation with adsorbers (A, B, C, D) of a first adsorption stage (I) ;

c) the adsorbers (A, B, C, D) of the first adsorption stage (I) are filled with the same carbon molecular sieves as the subsequent adsorption stage (II) and in order to enrich the helium during the return of the waste gas from the subsequent adsorption stage (II) into the charge gas of the first adsorption stage (I) they are pushed up to adsorption pressure and released after adsorption in a plurality of steps in each case ;

ca) the pressure build-up phase comprising three steps :

1st a pressure build-up step from an end vacuum pressure ($P_1$) to a medium pressure level ($P_3$) ;

2nd a pressure build-up step from the medium pressure level ($P_3$) to a higher pressure level ($P_4$) ;

3rd a pressure build-up step from the higher pressure level ($P_4$) to the highest pressure level ($P_5$) – adsorption pressure ;

cb) the pressure release phase comprising four steps :

1st a pressure release step from the highest pressure level ($P_5$) to the higher pressure level ($P_4$) ;

2nd a pressure release step from the higher pressure level ($P_4$) to the medium pressure level ($P_3$) ;

3rd a pressure release step from the medium pressure level ($P_3$) to atmospheric pressure ($P_2$) ;

4th a pressure release step from atmospheric pressure ($P_2$) to the end vacuum pressure ($P_1$) ;

cc) the pressure equalization taking place in two stages, and in the first stage the release takes place from the outlet of a first adsorber, which performs the 1st release step (from $P_5$ to $P_4$), to the outlet of a second adsorber, which performs the 2nd pressure build-up step (from $P_3$ to $P_4$) and in the second step the release takes place from the outlet of the first adsorber, which performs the 2nd release step (from $P_4$ to $P_3$), to the inlet of a third adsorber, which performs the 1st pressure build-up step (from $P_1$ to $P_3$), and

cd) the 3rd release step and the 4th release step taking place in counter-flow, a waste gas lean in helium being produced, and the 3rd pressure build-up step being performed with product gas.

2. A process according to Claim 1, characterized in that the highest pressure level ($P_5$) – adsorption pressure – amounts to over 1 bar, preferably from 10 to 30 bar, and the end vacuum pressure amounts to under 500 mbar, preferably 50 mbar.

3. A process according to Claim 2, characterized in that the individual pressure levels have the following pressure values associated with them :

$P_1$ =   50 mbar
$P_2$ =   1 bar
$P_3$ =   4 bar

13

$P_4 =$   11.7 bar
$P_5 =$   20 bar.

4. A process according to any one of Claims 1 to 3, characterized in that the total cycle time amounts to between 450 and 3600 s, preferably 720 s.

5. A process according to Claim 4, characterized in that the pressure release phase with a total cycle time of 720 s comprises the following time intervals :

```
1st release step from P₅ to P₄           55 s

    rest position                       115 s

2nd release step from P₄ to P₃           10 s

3rd release step from P₃ to P₂           55 s

4th release step from P₂ to P₁          115 s.
```

6. A process according to Claim 4, characterized in that the pressure build-up phase with a total cycle time of 720 s comprises the following time intervals :

```
1st build-up step from P₁ to P₃           10 s

2nd build-up step from P₃ to P₄           55 s

3rd build-up step from P₄ to P₅          125 s.
```

7. A process according to Claim 4, characterized in that the product gas recovery in a total cycle time of 720 s amounts to a period of time of 180 s.

8. A process according to Claim 1, characterized in that the helium proportion in the charge gas amounts to < 10% by volume, preferably from 2 to 8% by volume.


**Revendications**

1. Procédé d'extraction de l'hélium, selon un procédé d'adsorption à variation de pression, de mélanges de gaz qui contiennent de l'hélium, de l'azote et du méthane, comme éventuellement aussi d'autres gaz et que l'on fait passer à travers des tamis moléculaires de carbone, d'un diamètre moyen des pores d'adsorption compris entre 0,1 et 0,4 mm, de préférence entre 0,3 et 0,4 mm, qui adsorbent l'azote et le méthane, comme éventuellement aussi les autres gaz, conformément auquel on alimente de manière cyclique 4 adsorbeurs, raccordés en parallèle (E, F, G, H), en mélange de gaz, qui passent l'un après l'autre par une phase d'élévation de pression, une phase d'adsorption et une phase de réduction de pression pour la régénération, conformément auquel l'élévation de pression s'effectue d'abord par une compensation de pression avec un adsorbeur à régénérer et ensuite avec du gaz produit, cependant que la régénération commence avec compensation de pression, à laquelle se raccorde la détente et le rinçage avec du gaz produit, caractérisé en ce que l'on entreprend la combinaison de ces étapes opératoires, que l'on caractérise d'étape d'adsorption (II) postérieure, avec les étapes opératoires supplémentaires suivantes :

a) au cours d'une étape de préfiltration (V), dont les adsorbeurs (J, K, L, M) sont remplis de charbon activé, on élimine des hydrocarbures supérieurs, comme éventuellement aussi d'autres impuretés du mélange de gaz contenant de l'hélium,

b) les adsorbeurs (J, K, L, M) de l'étape de préfiltration (V) sont adjoints en fonction des besoins d'exploitation aux adsorbeurs (A, B, C, D) d'une première étape d'adsorption (I),

c) les adsorbeurs (A, B, C, D) de la première étape d'adsorption (I) sont remplis des mêmes tamis moléculaires de carbone que l'étape d'adsorption postérieure (II) et sont, en vue de l'enrichissement en hélium, formés, à chaque fois en plusieurs stades, à la pression correspondant à la pression d'adsorption avec renvoi du gaz résiduel de l'étape d'adsorption postérieure (II) dans le gaz d'alimentation de la première étape d'adsorption (I) et sont détendus après l'adsorption, où

ca) la phase d'élévation de pression comprend 3 stades :

1. Stade d'élévation de pression d'une pression de vide finale ($P_1$) à un étage de pression moyenne

(P$_3$),

2. Stade d'élévation de pression de l'étage de pression moyenne (P$_3$) à un étage de pression supérieure (P$_4$),

3. Stade d'élévation de pression de l'étage de pression supérieure (P$_4$) à l'étage de pression la plus élevée (P$_5$) – pression d'adsorption,

cb) la phase de réduction de pression comprend 4 stades :

1. Stade de réduction de pression de l'étage de pression la plus élevée (P$_5$) à l'étage de pression supérieure (P$_4$),

2. Stade de réduction de pression de l'étage de pression supérieure (P$_4$) à l'étage de pression moyenne (P$_3$),

3. Stade de réduction de pression de l'étage de pression moyenne (P$_3$) à la pression atmosphérique (P$_2$),

4. Stade de réduction de pression de la pression atmosphérique (P$_2$) à la pression de vide finale (P$_1$),

cc) la compensation ou l'équilibrage de pression s'effectue en deux étages, où on opère une détente dans le premier étage depuis la sortie d'un premier adsorbeur qui effectue le premier stade de réduction (de P$_5$ à P$_4$) jusqu'à la sortie d'un second adsorbeur qui effectue le second stade d'élévation de pression (de P$_3$ à P$_4$) et on opère une détente dans le second étage depuis la sortie du premier adsorbeur qui effectue le second stade de réduction (de P$_4$ à P$_3$), jusqu'à l'entrée d'un troisième adsorbeur qui effectue le premier stade d'élévation de pression (de P$_1$ à P$_3$) et

cd) le troisième stade de réduction et le quatrième stade de réduction s'effectuent en contrecourant, si bien que se présente un gaz résiduel pauvre en hélium et on entreprend le troisième stade d'élévation de pression avec du gaz produit.

2. Procédé suivant la revendication 1, caractérisé en ce que les étages de pression la plus élevée (P$_5$) – pression d'adsorption – sont supérieurs à 1 bar, de préférence de 10 à 30 bars et la pression de vide finale est inférieure à 500 mbars, de préférence cette pression de vide finale est de 50 mbars.

3. Procédé suivant la revendication 2, caractérisé en ce que l'on attribue les valeurs de pression suivantes aux étages de pression individuels :

P$_1$ =    50 mbars
P$_2$ =    1 bar
P$_3$ =    4 bars
P$_4$ =    11,7 bars
P$_5$ =    20 bars

4. Procédé suivant l'une quelconque des revendications 1 à 3, caractérisé en ce que la durée totale du cycle varie de 450 à 3600 s et est de préférence égale à 720 s.

5. Procédé suivant la revendication 4, caractérisé en ce que la phase de réduction de pression comprend les intervalles de temps suivants pour une durée de cycle totale de 720 s.

```
Premier stade de réduction de P₅ à P₄      55 s
Repos                                      115 s
Second stade de réduction de P₄ à P₃        10 s
Troisième stade de réduction de P₃ à P₂     55 s
Quatrième stade de réduction de P₂ à P₁    115 s
```

6. Procédé suivant la revendication 4, caractérisé en ce que la phase d'élévation de pression comprend les intervalles de temps suivants pour une durée de cycle globale de 720 s :

```
Premier stade d'élévation de pression de P₁ à P₃    10 s
Second stade d'élévation de pression de P₃ à P₄     55 s
Troisième stade d'élévation de pression de P₄ à P₅ 125 s
```

7. Procédé suivant la revendication 4, caractérisé en ce que l'obtention ou l'extraction du gaz produit comprend une durée de temps de 180 s pour une durée de cycle totale de 720 s.

8. Procédé suivant la revendication 1, caractérisé en ce que la fraction d'hélium dans le gaz mis en oeuvre ou d'alimentation est inférieure à 10% en volume, de préférence égale à 2 à 8% en volume.

FIG. 1

FIG. 2

EP 0 291 976 B1

18

| T1 | | | T2 | ⊠ | T3 | T4 | T5 | T6 | T7 | T8 | | Adsorber A |
|----|---|---|----|----|----|----|----|----|----|----|---|------------|
| T7 | T8 | | T1 | | | T2 | ⊠ | T3 | T4 | T5 | T6 | Adsorber B |
| T4 | T5 | T6 | T7 | T8 | | T1 | | | T2 | ⊠ | T3 | Adsorber C |
| T2 | ⊠ | T3 | T4 | T5 | T6 | T7 | T8 | | T1 | | | Adsorber D |

Teilschrittfolgetabelle

FIG. 3

**Legende:**

DA1/2: Druckausgleich (p↑) ; DA3: Druckaufbau mit Produktgas
Da1/2: Druckausgleich (p↓)
Ev. : Evakuierung
GEE : Gegenstrom - Entspannung
⊠ : Stand by   •: Ventil geöffnet

| Phase → | 1 | 2 | 3 | 4 | 5 | 6 | 7 | 8 | 9 | 10 | 11 | 12 | Adsorber |
|---|---|---|---|---|---|---|---|---|---|---|---|---|---|
| Zeitschritt → | z1 | z2 | z3 | z1 | z2 | z3 | z1 | z2 | z3 | z1 | z2 | z3 | |
| | Adsorption | | | Da1 | ⊠ | Da2 | GEE | Ev. | DA1 | DA2 | DA3 | | A |
| | DA2 | DA3 | | Adsorption | | | Da1 | ⊠ | Da2 | GEE | Ev. | DA1 | B |
| | GEE | Ev. | DA1 | DA2 | DA3 | | Adsorption | | | Da1 | ⊠ | Da2 | C |
| | Da1 | ⊠ | Da2 | GEE | Ev. | DA1 | DA2 | DA3 | | Adsorption | | | D |

**Ventil (Adsorber →)**

| Ventil | 1 | 2 | 3 | 4 | 5 | 6 | 7 | 8 | 9 | 10 | 11 | 12 |
|---|---|---|---|---|---|---|---|---|---|---|---|---|
| 10 | • | • | • | | | | | | | | | |
| 20 | | | | • | • | • | | | | | | |
| 30 | | | | | | | • | • | • | | | |
| 40 | | | | | | | | • | | • | • | • |
| 11 | | | | | | | | | | | • | |
| 21 | | | | | | | | | | | | |
| 31 | | • | | | | | | | | | | |
| 41 | | | | | • | | | | | | | |
| 12 | | | | | | | • | | • | • | | • |
| 22 | | | | | | | | | | | | |
| 32 | • | | • | | | | | | | | | |
| 42 | | | | • | | • | | | | | | |
| 13 | • | • | • | | | | | | | | | |
| 23 | | | | • | • | • | | | | | | |
| 33 | | | | | | | • | • | • | | | |
| 43 | | | | | | | | | | • | • | • |
| 14 | | | | | | • | | | | | | |
| 24 | | | | | | | | | • | | | • |
| 34 | | | | | | | | | | • | | |
| 44 | | | • | | | | | | | • | • | • |
| 15 | | | | | • | | | | | | | |
| 25 | • | • | • | | | | • | | | | | |
| 35 | | | | | • | • | | | | | | |
| 45 | • | | | | | | • | • | • | | • | • |
| 50 | | • | • | | • | • | | • | | • | | |
| 50 | • | | | • | | | • | | | • | | |

FIG. 4

EP 0 291 976 B1

FIG. 5

FIG. 6

22

| T 1.2 | | T2.2 | T3.2 | T 4.2 | | T5.2 | T6.2 | Adsorber E |
|---|---|---|---|---|---|---|---|---|
| T5.2 | T 6.2 | T 1.2 | | T2.2 | T3.2 | T 4.2 | | Adsorber F |
| T 4.2 | | T5.2 | T6.2 | T1.2 | | T2.2 | T3.2 | Adsorber G |
| T2.2 | T3.2 | T 4.2 | | T5.2 | T6.2 | T 1.2 | | Adsorber H |

FIG.7

EP 0 291 976 B1

**Legende:**

Da 1 : Druckausgleich ( p↓ )
DA 1 : Druckausgleich ( p↑ )
DA 2 : Druckaufbau mit Produktgas
GEE : Gegenstrom-Entspannung
• : Ventil geöffnet

| Phase → | 1 | 2 | 3 | 4 | 5 | 6 | 7 | 8 | Adsorber → |
|---|---|---|---|---|---|---|---|---|---|
| Zeitschritt → | z 1 | z 2 | z 1 | z 2 | z 1 | z 2 | z 1 | z 2 | |
| | Adsorption | | ↓Da 1 | GEE | Spülen | | ↑DA1 | DA2 | E |
| | DA 1 | DA 2 | Adsorption | | ↓Da 1 | GEE | Spülen | | F |
| | Spülen | | ↓DA 1 | DA 2 | Adsorption | | Da 1 | GEE | G |
| Ventil | Da 1 | GEE | Spülen | | ↓DA 1 | DA 2 | Adsorption | | H |
| 110 | • | • | | | | | | | |
| 120 | | | • | • | | | | | |
| 130 | | | | | • | • | | | |
| 140 | | | | | | | • | • | |
| 111 | | | | | | | • | • | |
| 121 | | | | | | | | | |
| 131 | • | • | | | | | | | |
| 141 | | | • | • | | | | | |
| 112 | | | | • | | | | | |
| 122 | | | | | | • | | | |
| 132 | | | | | | | | • | |
| 142 | | • | | | | | | | |
| 113 | | | | | • | • | • | • | |
| 123 | | | | | | | | | |
| 133 | • | • | | | | | | | |
| 143 | | | • | • | | | • | • | |
| 114 | | | • | | • | | | | |
| 124 | • | • | | • | • | | • | | |
| 134 | | | • | • | | • | | | |
| 144 | • | | | | • | • | | | |
| 115 | • | • | | | | | | | |
| 125 | | | • | • | | | | | |
| 135 | | | | | • | • | • | • | |
| 145 | | | | | | | | • | |
| 150 | | • | | • | | • | | • | |

FIG. 8